# EUROPEAN PATENT SPECIFICATION

(11) **EP 2 978 821 B1**
(45) Date of publication and mention of the grant of the patent: **11.11.2020**
(21) Application number: 14713247.6
(22) Date of filing: 17.03.2014
(51) Int. Cl.: C10B 51/00, C10B 53/02, C10B 49/02

(54) **A METHOD FOR PRODUCING BIOCHAR**
VERFAHREN ZUR HERSTELLUNG VON BIOKOHLE
PROCÉDÉ DE PRODUCTION DE BIOCHAR

(30) Priority: 28.03.2013 GB 201305688
(43) Date of publication of application: 03.02.2016
(73) Proprietor: Carbon Gold Limited, Bristol BS1 4EX (GB)
(72) Inventor: MCCHESNEY, Ian, Bristol BS1 4EX (GB)
(74) Representative: Handsome I.P. Ltd
(86) International application number: PCT/GB2014/050837
(87) International publication number: WO 2014/155058

(56) References cited:
- WO-A1-99/51917
- WO-A1-99/51917
- WO-A1-2011/019901
- WO-A1-2011/019901
- GB-A- 2 322 439
- KR-A- 20110 089 822
- KR-A- 20110 089 822
- US-A1- 2006 280 670
- US-A1- 2006 280 670
- US-A1- 2006 280 670
- US-A1- 2013 067 802

## Description

The present invention relates generally to a method of producing biochar and finds particular, although not exclusive, utility in the pyrolysis of low grade biomass feedstock, such as wood chippings, to form biochar.

Biochar is similar to charcoal but is produced at lower temperatures and typically contains around 30% volatiles as compared to charcoal which when fully carbonised typically contains around 20% volatiles.

Biochar may be used as a soil improver and has an added benefit of carbon sequestration.

Although there are already existing methods and apparatus for producing biochar it is desirable to extend the range of feedstocks from which it can be made and to facilitate rapid conversion of fresh material with relatively simple equipment at the same time as improving the efficiency of the process, particularly heat recovery, and reducing the quantity of undesirable gases, such as methane, entering the atmosphere. US2006/280670A1, GB2322439A, US2013/067802A1 all describe devices for pyrolysing biomass.

In a first aspect, the invention provides a method of producing biochar comprising the steps of:
a. placing feedstock in a kiln;
b. burning fuel in an oxidiser and directing the resultant heated gases from the oxidiser to the feedstock to reduce the moisture content of the feedstock;
c. burning fuel in an oxidiser and directing the resultant heated gases from the oxidiser to the feedstock to pyrolyse the feedstock;
d. removing at least some of the pyrolytic gases, released from the feedstock in step c, to the oxidiser for burning therein;
e. directing at least a portion of the at least partially inert gases resultant from the burning of the pyrolytic gases in step d to the feedstock to regulate the amount of heat and air supplied to the kiln to controllably continue pyrolysis of the feedstock therein;
characterised in that;
at least some of the heated gases resultant from the fuel burning in either, or both, of steps b and c are directed around the outside of the kiln in an at least partial spiral manner; and
at least some of the resultant heated gases from the fuel burning in step b are directed through the inside of the kiln from the top to the bottom, some of said gases then being directed to the atmosphere via a chimney, and some of said gases being recirculated to the kiln again.

The method may be known as "slow pyrolysis", although a variety of other names such as carbonisation and pyrolytic gasification may also be used. The kiln may be a closed vessel. The oxidiser may be separate from, and inside, the kiln.

The process has several stages whereby the feedstock is dried, warmed, and then charred. The charring stage is generally exothermic; whereas the drying and warming stages are generally endothermic. The feedstock may be wood, or woody biomass, including other organic plant matter such as husks, bark, stems and leaves. This feedstock may be relatively wet. Relatively small sizes of feedstock may be used or the feedstock may be baled requiring a kiln of an equivalent size.

The term "gases" may include steam.

The fuel burnt in the oxidiser in step b may be gas, diesel, wood, or dry feedstock. Initially the fuel burnt in step c may also be the same types of material. However, once the feedstock starts to pyrolyse the gases released by this process may be directed to the oxidiser for burning in place of the gas, diesel, wood or other material discussed above. In this regard the process may become at least partially self-fuelling.

However, as discussed in step e, some of the gases resultant from the burning of fuel in the oxidiser may be directed to the feedstock to control the temperature and amount of oxygen/air in the kiln to ensure pyrolysis efficiency, thus maximising the amount of pyrolysed material, and avoiding combustion of the feedstock.

The removal of the at least some of the pyrolytic gases in step d may be effected by directing a portion of the gases resultant from the fuel burning in step c to the kiln.

These resultant gases may be at least partially inert and help to carry the pyrolytic gases out of the kiln towards the oxidiser.

The amount of air introduced to the oxidiser with the pyrolytic gases in step d may be controlled such that incomplete combustion (sub-stoichiometric) of the mixture of air and pyrolytic gases occurs in the oxidiser. Accordingly, the temperature of the gases exiting the oxidiser may be controllable.

Air may be controllably introduced into the gases directed from the oxidiser in step e such that at least a portion of the gases are flared-off before reaching the feedstock. This may be because the feedstock produces excess gases. The pressure inside the kiln may be lower than the pressure inside the oxidiser.

The at least portion of gases may be flared-off via a flue. The inlet to the flue may be located within the oxidiser. It may be located at, or towards, the top of the oxidiser. The oxidiser may include a combustor for burning the fuel in. The combustor may be substantially circular in plan, although other non-square shapes such as octagonal, hexagonal and the like are also contemplated. The oxidiser may be similarly shaped in plan. At least some of the pyrolytic gases removed in step d to the oxidiser for burning therein may be directed into a combustor in a direction tangential to the centre of the combustor.

These pyrolytic gases may be directed into the oxidiser at a point above the inlet of the flue in the oxidiser.

The flow of at least some of the heated gases resultant from the fuel burning in either, or both, of steps b and c being directed around the outside of the kiln in an at least partial spiral manner may warm up the feedstock within the kiln indirectly. A conduit may be provided for this purpose as will be described in more detail below.

The resultant heated gases may pass through the feedstock (in between the individual woody particles) thus warming and/or heating them. In one embodiment no recirculation of the gases, after passing through the kiln, occurs. In another embodiment, all gases are recirculated to the kiln again.

The fuel burnt in the oxidiser in step c may be solely formed of the resultant pyrolytic gases resultant from the pyrolysing of the feedstock in step c, and removed in step d.

At least some of the heated gases resultant from the fuel burning in step c may be directed to the top of the kiln directly and mixed with the heated gases directed around the outside of the kiln in an at least partially spiral manner.

In this regard, the term "top" may also include substantially close to the top of a side of the kiln.

Control means may be provided which allow the proportion of heated gases arriving at the top of the kiln and the proportion of heated gases arriving via the spiral conduit to be regulated, as required. The control means may be one or more mechanical means such as a valve, a butterfly valve, a fan, and an air pump, and/or temperature sensors, and a PCU.

The drying of the feedstock in step b may remove the moisture as saturated vapour.

The pyrolysis of the feedstock in step c may remove the non-solid pyrolysis products from the feedstock, leaving a residual biochar.

The heated gases resultant from step d may be directed to a second kiln for drying feedstock therein. The second kiln may then be progressed to conduct pyrolysis in the same manner as described herein. While this is occurring the first kiln may be emptied and refilled with feedstock. The heated gases resultant from step d in the second kiln may then be directed to the first kiln for drying the new feedstock.

In this way, two kilns may be arranged in tandem such that the heat and gases produced by either or both of the kilns may be used in either or both of the kilns.

A biochar manufacturing apparatus is described comprising a kiln, arranged to accept feedstock, an oxidiser, a flue leading away from the oxidiser, an arrangement of conduits connecting the kiln, oxidiser and flue together, and a plurality of valves for regulating fluid flow through the conduits, wherein a first of said conduits connects to the kiln at a first position for removing pyrolytic gases, produced in use from feedstock in the kiln, for burning in the oxidiser, and a second of said conduits connects the oxidiser to the kiln at a second position for transferring at least partially inert gases produced by burning said pyrolytic gases in said oxidiser, wherein the first said conduit is connected to the kiln beneath a grate positioned at the base of said kiln, the second said conduit is connected to the top of the kiln and is arranged in a spiral manner around the outside of the kiln.

The at least partially inert gases may be substantially inert. Feedstock, in the form discussed above, may be introduced into the kiln for pyrolysing. The kiln may have a removable lid. The kiln may be manufactured predominantly from mild steel sheet (possibly 3mm thick) and include a grate towards the bottom.

The second said conduit may spiral around the outside of the kiln at least twice to transfer hear to the kiln. Alternatively, or additionally, a third said conduit may be a separate conduit which leads to the top of the kiln and connects with the second said conduit approximately at the top of the kiln.

The apparatus may further comprise a fourth said conduit connectable with the first said conduit for directing at least some of the pyrolytic gases, removed from the kiln, back to the kiln. This fourth said conduit may connect towards the top of the kiln.

The apparatus may comprise two kilns and one shared oxidiser, the three being configured and arranged to fit into the same shape and volume as a 'TEU' twenty foot equivalent unit ISO shipping container, the conduits being arranged such that heated gases produced during pyrolysis of the feedstock in one kiln is directed to the other kiln for drying of the feedstock within.

This allows the apparatus to be easily transported.

The apparatus may include a conduit for connecting a chimney, and/or the flue, and interior of the drying kiln to the oxidiser for transferring at least partially inert gases, produced by burning said pyrolytic gases in said oxidiser, and/or vapour produced from the drying of the feedstock, so as to regulate the temperature in the kiln(s).

The biochar manufacturing apparatus may comprise a burner separate from said oxidiser for indirectly heating the drying kiln. The burner and oxidiser may both be fuelled at least partially by pyrolytic gases resultant from the pyrolysing kiln.

A biochar manufacturing apparatus being arranged to operate in accordance with the methods of the first aspect is described.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Figure 1 is a schematic diagram of a first embodiment;
Figure 2 is a table showing the various valve and fan settings which may be used in various stages of the process and operation of the first embodiment;
Figure 3 is a schematic diagram of a second embodiment;
Figure 4 is a table showing the various valve and fan settings which may be used in various stages of the process and operation of the left hand kiln shown in the second embodiment;
Figure 5 is a table showing the various valve and fan settings which may be used while recovering heat from the left hand kiln to the right hand kiln in the second embodiment; and
Figure 6 is a schematic diagram of an oxidiser.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein.

It is to be noticed that the term 'comprising', used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression 'a device comprising means A and B' should not be limited to devices consisting only of components A and B. It means that with respect to the present invention, the only relevant components of the device are A and B.

Similarly, it is to be noticed that the term 'connected', used in the description, should not be interpreted as being restricted to direct connections only. Thus, the scope of the expression 'a device A connected to a device B' should not be limited to devices or systems wherein an output of device A is directly connected to an input of device B. It means that there exists a path between an output of A and an input of B which may be a path including other devices or means. 'Connected' may mean that two or more elements are either in direct physical or electrical contact, or that two or more elements are not in direct contact with each other but yet still co-operate or interact with each other.

Reference throughout this specification to 'an embodiment' or 'an aspect' means that a particular feature, structure or characteristic described in connection with the embodiment or aspect is included in at least one embodiment or aspect of the present invention. Thus, appearances of the phrases 'in one embodiment', 'in an embodiment', or 'in an aspect' in various places throughout this specification are not necessarily all referring to the same embodiment or aspect, but may refer to different embodiments or aspects. Furthermore, the particular features, structures or characteristics of any embodiment or aspect of the invention may be combined in any suitable manner, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term 'at least one' may mean only one in certain circumstances.

The principles of the invention will now be described by a detailed description of at least one drawing relating to exemplary features of the invention. It is clear that other arrangements can be configured according to the knowledge of persons skilled in the art without departing from the underlying concept or technical teaching of the invention, the invention being limited only by the terms of the appended claims.

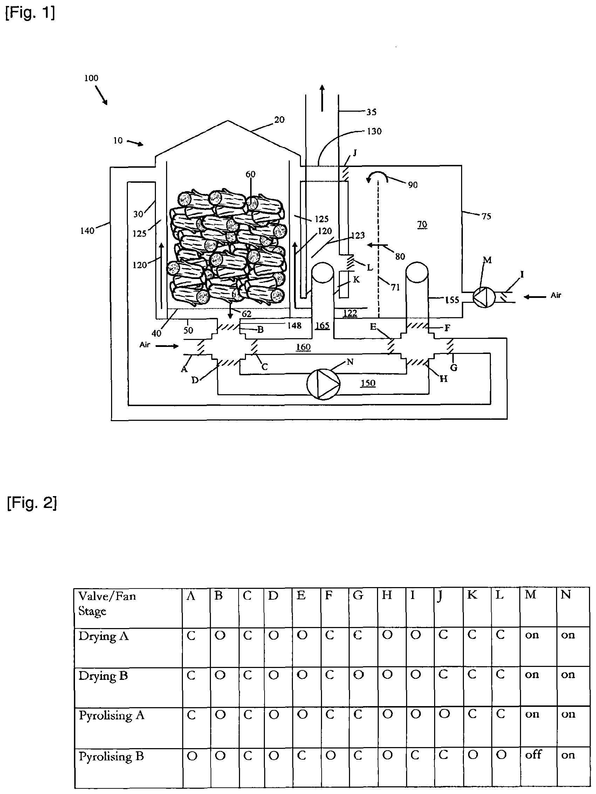

In Figure 1 a kiln arrangement 100 is depicted comprising a kiln 10 having side walls 30, a base 50, and a lid 20. The kiln is substantially cylindrical, although other shapes are contemplated. The lid is conical, although other shapes are contemplated, and is removable from the side walls 30.

The kiln is stocked with feedstock 60 in the form of cut timber, chips or bales. The height of the feedstock can be anywhere from 10% to 90% of the height of the side walls 30.

A grate 40 is provided at the base of the kiln 10 to allow gas flow from within the kiln to a conduit 148 without the conduit being blocked by the feedstock 60.

A spiral conduit is indicated 125 rising from a point near the base 50 of the kiln 10 to the top of the side walls 30. It may wrap around the outside of the kiln walls 30 less than once, more than once, between two and three times, and possibly more than three times. The exit of the spiral conduit 125 is approximately in the range of 90 to 180 degrees of an arc length of the cylindrical side walls. The exit forms a slot at the top of the side walls of the kiln.

Another conduit 140 is provided leading from, and to, the top of the side walls of the kiln. It is shown meeting the top of the side walls 30 substantially opposite the exit from the spiral conduit 125.

An oxidiser 70 in the form of a brick built chamber 75 is provided adjacent the kiln 10. The chamber 75 may be integral with, connected to, or associated with, the kiln side walls 30. The oxidiser may be substantially cylindrical with a cylindrical combustor provided therein for the burning of fuel.

A conduit 130 from the upper portion of the chamber 75 leads to the top of the side walls 30 of the kiln 10. In one embodiment it meets with the spiral conduit 125 just before, or at, the exit from the spiral conduit.

Another conduit 122 leads from the lower portion of the chamber 75 to the spiral conduit 125.

A chimney 35 is provided substantially between the oxidiser 70 and the kiln 10. It may be integral with the chamber 75 in one embodiment. The chimney includes a damper 123 used to control gas flow up it.

An array of conduits 160, 150, 155, 165 is also provided connecting the chimney 35, the chamber 75, the conduit 148 leading from the base of the kiln 10 and the conduit 140 leading to the top of the side walls 30.

All conduits may comprise steel tubing, although other materials and shapes are contemplated. Some or all of the conduits may include insulation. The conduits may have a diameter of 125mm.

Two inlets A, I are provided into the kiln arrangement 100; a first one I which allows air from the surrounding environment to enter the chamber 75, and a second A which allows air from the surrounding environment to enter the array of conduits as secondary combustion air and also, in one embodiment, to cool the fan N described below.

A fan M is associated with the first inlet to increase volume flow-rate and to introduce primary combustion air. Another fan N is associated with one of the conduits 150 in the array of conduits.

Valves, otherwise described as dampers, butterfly valves, or regulators, are provided throughout the kiln arrangement 100 to regulate and control the flow of heat, gases and air therethrough.

The chimney 35 may have gas introduced into it via two routes. The first is a conduit 165 which extends from the conduit 160. Conduit 160 connects the inlet A, the kiln outlet 148 and the junction of valves E, F, G, and H. The second is via conduit 122 (and valve K) which connects the lower portion of the chamber 75 with the spiral conduit 125.

To operate the kiln arrangement 100 to produce biochar the following steps may be followed.

The kiln is loaded with feedstock after removal of the lid 20. The lid is then replaced 20. The various valves are then set as shown in Figure 2 for the first stage of drying (referred to as 'Drying A' in the Figure). In Figure 2 the letter 'O' stands for 'open' and the letter 'C' stands for 'closed'.

Fuel is burnt in the oxidiser 70. The heated gases resultant from this burning are able to reach the side of the chimney 35 and the conduit 122 via a partially porous barrier 71 provided within the chamber 75, as indicated by the arrow referenced '80', although some can travel over the top of the barrier 71 as indicated by the arrow referenced '90'.

Air may be blown in to the chamber 75 via the inlet I and with the assistance of the fan M.

The heated gases warm-up the chimney 35 and travel around the outside of the kiln 10 via the spiral conduit 125 as indicated by the arrow referenced '120'. These heated gases then travel out of the exit of the spiral conduit 125 and into the interior of the kiln 10. They then travel through the feedstock in the direction of the arrow referenced '62' down to the grate 40 and pass through the conduit 148. The heated gases then pass along conduits 150, 160 to the chimney 35, where they exit to the atmosphere.

The flow of the heated gases is assisted by the fan N provided in association with conduit 150 and also by the warming of the chimney 35.

The heated gases will warm and dry the feedstock 60 directly as they pass therethrough and indirectly as heat is radiated into the kiln interior from the spiral conduit 125. The gases cool as they travel along the spiral conduit 125 which may be preferential.

In the next stage, referenced as 'Drying Stage B' in Figure 2, the valves are set as shown in the table. This stage may commence based on a monitored temperature such as that of the feedstock, and/or the gases exiting the kiln via conduit 148 and so on.

In this stage, fuel is still burnt in the oxidiser, and air is still allowed to enter the chamber 75. The only difference as far as the valves are concerned is that valve G is opened. This allows some of the heated gases which have been removed from the interior of the kiln 10 through conduits 148, 150 to be recycled to the kiln 10 via conduit 140. This may improve the efficiency of the system as the gases exiting the kiln 10 may still be relatively hot and can further dry the feedstock 60. Alternatively, the gases may be recirculated to cool the kiln so as to maintain the feedstock at the appropriate temperature (with cold gas recycle). In this regard, the temperature of the feedstock is carefully controlled so as not to set it alight.

The speed of fan N may be increased to compensate for the reduced gas flow to the chimney via valve E.

In an alternative to the Drying B stage, where the pressure in the Oxidiser may be higher than the pressure in the Kiln valve C is opened and valve E closed. This has the effect that some of the heated gases exiting the interior of the kiln 10 are permitted to pass straight to the chimney rather than via the conduit 150 and fan N. However, some of the heated gases may still be returned to the kiln 10 via conduit 140 as described previously. During either or both drying stages a condensation front moves down through the feedstock. The gas exiting at the bottom of the kiln is typically saturated and has a temperature of 70 degrees Centigrade. The feedstock temperature in either or both drying stages may be limited to 120 degrees Centigrade.

The next stage is referenced 'Pyrolysis A' in Figure 2 and the valves are accordingly set as shown.

Fuel is still burnt in the oxidiser 70. Air is also still introduced into the chamber 75 via inlet I. However, the valve J in the upper portion of the chamber 75 is now opened to allow some of the heated gases from the oxidiser 70 to reach the top of the side walls 30 of the kiln 10 without travelling via the spiral conduit 125. Opening valve J allows for the temperature of the kiln to be increased, or maintained through hot gas recycle. Although inlet A is shown as closed it may be opened if the temperature of fan N reaches a threshold value. In this regard, the temperature of the fans M, N may be monitored.

No recirculation of the heated gases exiting the kiln via conduit 148 occurs because valve G is closed. Rather all heated gases travel to the chimney 35.

In the next stage referenced 'Pyrolysis B' in Figure 2, the valves are amended as indicated in the table. The upper valve J is closed again. Inlet I is also closed, but inlet A is opened in its place. Further, valve F is opened and valve E closed directing the gases exiting the kiln 10 via conduits 148, 150 to the chamber 75 for burning therein.

Furthermore valve K is opened allowing some of the heated gases passing along conduit 122 from the oxidiser 75 to the spiral conduit 125 to instead pass up the chimney. Valve L permits air (from outside of the oxidiser) to enter the chimney thus allowing the gases entering it via valve K to be burnt off as a flare at the top of the chimney.

None of the gases exiting the kiln 10 are permitted to reach the chimney directly; rather, they must be burnt in the oxidiser 70 first. This reduces the release of unburnt methane and other such gases to the atmosphere.

No recirculation of the gases exiting from the kiln via conduits 148, 150 is permitted via conduit 140.

Pyrolysis stage B may be dispensed with if necessary.

The temperature in the kiln may be limited to approximately 550 degrees Centigrade during either or both of the Pyrolysis stages. This temperature control may be effected by regulating the oxidiser and the gas flow around the various conduits in the system.

A cooling stage may typically follow the pyrolysing stage. The positions of the various valves may be all closed and the fans switched off. Alternatively, they may be set so as to accelerate the cooling while limiting emissions of any noxious gases to atmosphere. In one embodiment, valves A, B and C may be opened to admit vapour from the chimney to the kiln for cooling purposes in conjunction with adjustments to the chimney damper 123 setting and Valve K.

It should be noted that although the valves and fans have been described in the foregoing as being open or closed, or on or off, it will be understood that in practise the valves will be regulated such that the amount they are open is variable as conditions require. Furthermore, the speed of the fans may be regulated for the same reason.

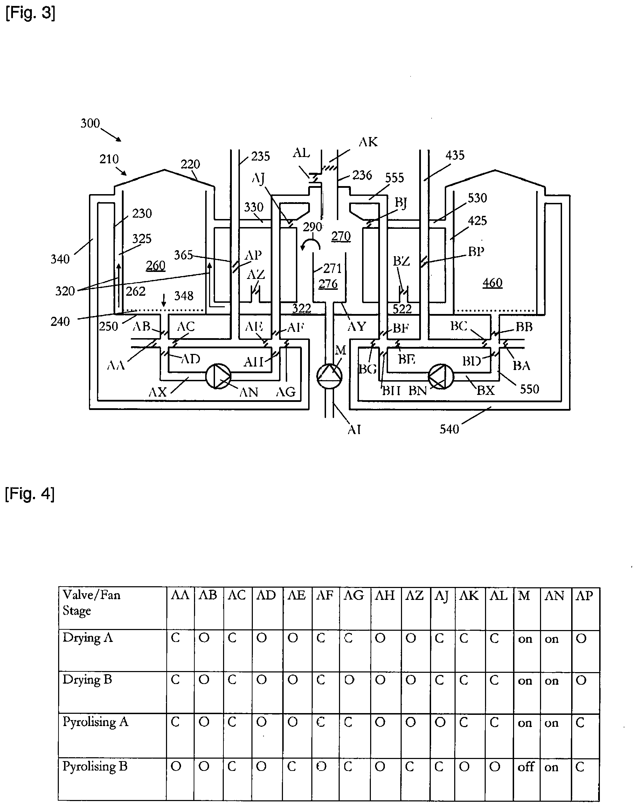

In Figure 3 a kiln arrangement 300 is depicted comprising a left hand kiln 210 having side walls 230, a base 250, and a lid 220, and a right hand kiln 410 having similar features. The kilns are substantially cylindrical, although other shapes are contemplated. The lids are conical, although other shapes are contemplated, and is removable from the side walls 230.

The kiln may be stocked with feedstock 260 in the form of cut timber, chips or bales. The height of the feedstock can be anywhere from 10% to 90% of the height of the side walls 230.

A grate 240 is provided at the base of the kiln 210 to allow gas flow from within the kiln to a conduit 348 without the conduit being blocked by the feedstock 260.

A spiral conduit is indicated 325 rising from a point near the base 250 of the kiln 210 to the top of the side walls 230. It may wrap around the outside of the kiln walls 230 less than once, more than once, between two and three times, and possibly more than three times. The exit of the spiral conduit 325 is approximately in the range of 90 to 180 degrees of an arc length of the cylindrical side walls. The exit forms a slot at the top of the side walls of the kiln.

Another conduit 340 is provided leading from, and to, the top of the side walls of the kiln. It is shown meeting the top of the side walls 230 substantially opposite the exit from the spiral conduit 325.

An oxidiser 270 in the form of a brick built chamber is provided adjacent the kiln 210. The oxidiser 270 may be integral with, connected to, or associated with, the kiln side walls 230. The oxidiser may be substantially cylindrical with a cylindrical combustor 276 provided therein for the burning of fuel.

A conduit 330 from the upper portion of the oxidiser 270 leads to the top of the side walls 230 of the kiln 210. In one embodiment it meets with the spiral conduit 325 just before, or at, the exit from the spiral conduit.

Another conduit 322 leads from the lower portion of the oxidiser 270 to the spiral conduit 325.

A chimney 235 is provided substantially between the oxidiser 270 and the kiln 210. The chimney includes a damper AP used to control gas flow up it.

An array of conduits 360, 365 is also provided connecting the chimney 235 to the conduit 348 leading from the base of the kiln 210.

A flue 236 is provided leading from the upper region of the oxidiser 270. This includes a damper AK to control gas flow therethrough and a valve AL controlling ambient air into the flue. The base of the flue 236 extends into the oxidiser 270. The flue 236 may act as a flare as will be described below.

A conduit 355 leads connects the conduit 348 leading from the base of the kiln 210 to the upper region of the oxidiser 270.

All conduits may comprise steel tubing, although other materials and shapes are contemplated. Some or all of the conduits may include insulation. The conduits may have a diameter of 125mm or may be 200mm.

Two inlets including control dampers AA, AI are provided into the kiln arrangement 300; a first one AI which allows air from the surrounding environment to enter the combustor 276, and a second one AA which allows air from the surrounding environment to enter the array of conduits as secondary combustion air and also, in one embodiment, to cool the fan AN described below.

A fan M is associated with the first inlet AI to increase volume flow-rate and to introduce primary combustion air. Another fan AN is associated with one of the conduits 350 in the array of conduits.

Valves, otherwise described as dampers, butterfly valves, or regulators, are provided throughout the kiln arrangement 300 to regulate and control the flow of heat, gases and air therethrough.

The chimney 235 may have gas introduced into it via a conduit 365 which extends from the conduit 360. Conduit 360 connects the inlet AA, the kiln outlet 348 and the junction of valves AE, AF, AG, and AH.

To operate the kiln arrangement 300 to produce biochar the following steps may be followed.

The left hand kiln is loaded with feedstock after removal of the lid 220. The lid is then replaced. The various valves are then set as shown in Figure 4 for the first stage of drying (referred to as 'Drying A' in the Figure). In Figure 4 the letter 'O' stands for 'open' and the letter 'C' stands for 'closed'.

Fuel is burnt in the oxidiser 270. The heated gases resultant from this burning travel up and over the sides of the combustor 276 (arrow referenced '290') and then travel via conduit 322 to the kiln 210.

Air may be blown in to the oxidiser 270 via the inlet AI with the assistance of the fan M.

The heated gases travel around the outside of the kiln 210 via the spiral conduit 325 as indicated by the arrow referenced '320'. These heated gases then travel out of the exit of the spiral conduit 325 and into the interior of the kiln 210. They then travel through the feedstock in the direction of the arrow referenced '262' down to the grate 240 and pass through the conduit 348. The heated gases then pass along conduits 350, 360 to the chimney 35, where they exit to the atmosphere.

The flow of the heated gases is assisted by the fan AN provided in association with conduit 350 and also by the warming of the chimney 235.

The heated gases will warm and dry the feedstock 260 directly as they pass therethrough and indirectly as heat is radiated into the kiln interior from the spiral conduit 325. The gases cool as they travel along the spiral conduit 325 which may be preferential.

In the next stage, referenced as 'Drying Stage B' in Figure 4, the valves are set as shown in the table. This stage may commence based on a monitored temperature such as that of the feedstock, and/or the gases exiting the kiln via conduit 348 and so on.

In this stage, fuel is still burnt in the oxidiser, and air is still allowed to enter via AI. The only difference as far as the valves are concerned is that valve AG is opened. This allows some of the heated gases which have been removed from the interior of the kiln 210 through conduits 348, 350 to be recycled to the kiln 210 via conduit 340. This may improve the efficiency of the system as the gases exiting the kiln 210 may still be relatively hot and can further dry the feedstock 260. Alternatively, the gases may be recirculated to cool the kiln so as to maintain the feedstock at the appropriate temperature (with cold gas recycle). In this regard, the temperature of the feedstock is carefully controlled so as not to set it alight.

The speed of fan AN may be increased to compensate for the reduced gas flow to the chimney via valve AE.

In an alternative to the Drying B stage, where the pressure in the oxidiser may be higher than the pressure in the kiln valve AC is opened and valve AE closed. This has the effect that some of the heated gases exiting the interior of the kiln 210 are permitted to pass straight to the chimney rather than via the conduit 350 and fan AN. However, some of the heated gases may still be returned to the kiln 210 via conduit 340 as described previously. During either or both drying stages a condensation front moves down through the feedstock. The gas exiting at the bottom of the kiln is typically saturated and has a temperature of 70 degrees Centigrade. The feedstock temperature in either or both drying stages may be limited to 120 degrees Centigrade.

The next stage is referenced 'Pyrolysis A' in Figure 4 and the valves are accordingly set as shown.

Fuel is still burnt in the oxidiser 270. Air is also still introduced via inlet AI. However, the valve AJ in the upper portion of the oxidiser 270 is now opened to allow some of the heated gases from the oxidiser 270 to reach the top of the side walls 230 of the kiln 210 without travelling via the spiral conduit 325. Opening valve AJ allows for the temperature of the kiln to be increased, or maintained through hot gas recycle. Although inlet AA is shown as closed it may be opened if the temperature of fan AN reaches a threshold value. In this regard, the temperature of the fans M, AN may be monitored.

No recirculation of the heated gases exiting the kiln via conduit 348 occurs because valve AG is closed. Rather all heated gases travel to the chimney 235.

In the next stage referenced 'Pyrolysis B' in Figure 4, the valves are amended as indicated in the table. The upper valve AJ is closed again. Inlet AI is also closed, but inlet AA is opened in its place. Further, valve AF is opened and valve AE closed directing the gases exiting the kiln 210 via conduits 348, 350, 355 to the oxidiser 270 for burning therein.

Valve AL permits air (from outside of the oxidiser) to enter the flue 236 thus allowing the gases entering it from the oxidiser 270 to be burnt off as a flare at the top of the flue.

No recirculation of the gases exiting from the kiln via conduits 348, 350 is permitted via conduit 340.

Pyrolysis stage B may be dispensed with if necessary.

The temperature in the kiln may be limited to approximately 550 degrees Centigrade during either or both of the Pyrolysis stages. This temperature control may be effected by regulating the oxidiser and the gas flow around the various conduits in the system.

A cooling stage may typically follow the pyrolysing stage. The positions of the various valves may be all closed and the fans switched off. Alternatively, they may be set so as to accelerate the cooling while limiting emissions of any noxious gases to atmosphere. In one embodiment, valves AA, AB and AC may be opened to admit vapour from the chimney to the kiln for cooling purposes in conjunction with adjustments to the chimney damper AP setting.

Valve AZ is located in conduit 322 and is used to control ambient air mixing with the hot gases travelling along conduit 322 from the oxidiser 270 to the kiln 210. This mixing may be used to cool the hot gases.

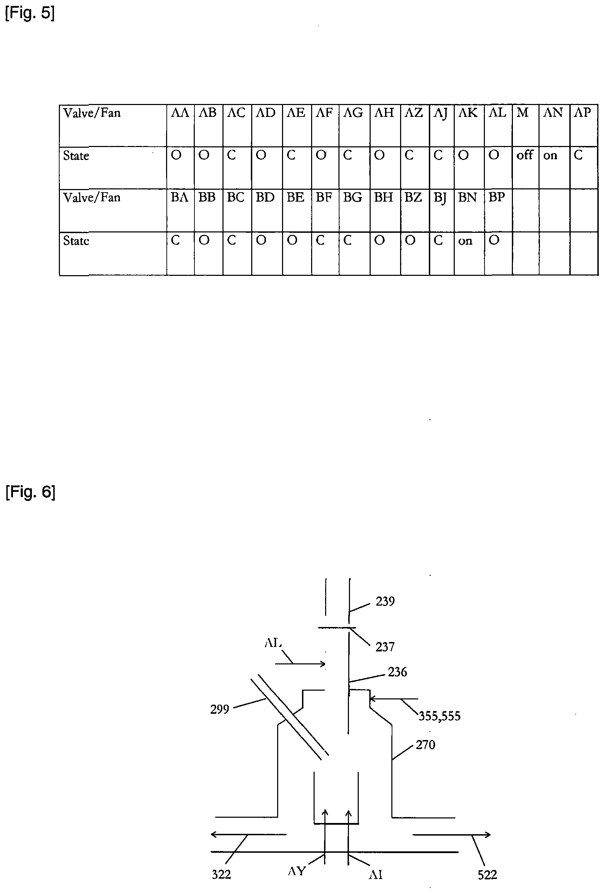

With regard to Figure 5 this table shows the valve and fan settings used to recycle heat from the left hand kiln 210 to the right hand kiln 410. This may be effected during Pyrolysis Stage B.

With valves and fans set as shown it is will be understood that pyrolytic gases produced from the feedstock in the left hand kiln 210 pass via the conduit 348 at the base of the kiln via fan AN and conduit 355 to the top of the oxidiser 270 for burning therein. The resultant hot gases travel back to the kiln 210 via conduit 322. However, some hot gases will also travel via conduit 522 (refer to Figure 3) around the side of the kiln 410 using the spiral conduit 425 and down through the feedstock 460 exiting via the conduit at the base. The resultant wet gas will travel via fan BN to the chimney 435 and out into the atmosphere.

In one alternative embodiment a series of conduits connect the point referenced 'AX' on conduit 350, 'BX' on conduit 550 and the combustor 276 at point 'AY'. A fan may also be provided in this series to help pump gases from either or both kilns 210, 410 into the combustor 276 for burning therein.

Figure 6 provides further information on the arrangement of the oxidiser 270 and combustor 276 arranged within.

A pipe 299 allows fuel (such as diesel, wood, etc.) to be put into the combustor 276 as required. The base of the flue 236 extends lower than the entry point 355 for pyrolytic gases from either kiln. This ensures that the pyrolytic gases burn correctly, as a continuous flame may be provided between the combustor 276 and the base of the flue 236. By contrast the entry of gases into the oxidiser at a point lower than the base of the flue 236, and especially near the base of the combustor 276, was found to result in unburnt gases being vented via the flue. Some of these gases will exit up the flue and be flared-off. This flaring may be controlled by means of allowing air into the flue via valve AL. A cap 237 is provided for closing-off the top of the flue 236 if required. A chimney portion 239 is provided above the flue 235. The conduit providing the pyrolytic gases from the kilns is arranged so that the gases enter the oxidiser 270 in a tangential manner relative to the plan of the combustor 276. This has been found to aid their burning as the gas may travel in an at least partially spiral-like manner towards the combustor 276.

The conduits 322, 522 shown on the right hand side of the base of the oxidiser 270 lead to the kilns 210, 410. The gases entering the combustor at point 'AY' come from the kilns as described above. The air entering the combustor at point 'AI' comes from the ambient environment.

It should be noted that although the valves and fans have been described in the foregoing as being open or closed, or on or off, it will be understood that in practise the valves will be regulated such that the amount they are open is variable as conditions require. Furthermore, the speed of the fans may be regulated for the same reason. The various stages have been described as examples of how the process may work in one embodiment, but it will be understood that variations may be required depending on the conditions. Such conditions could be the type of feedstock, the moisture content of the feedstock initially, the local climate in which the kiln is operating, the type of fuel used in the oxidiser, the type of biochar required, and so on. In other words, although a particular valve may be described as being open or closed in a particular stage, it will be understood that the opposite could be true in some embodiments. This is also the same for fans which could be off instead of on and vice versa.

The kiln apparatus may include heat recovery means for recovering heat from at least a portion of the apparatus during its operation. For instance, heat may be recovered from the chimney.

The methods and apparatus may be arranged to permit heat to be applied indirectly and then subsequently directly to the feedstock to dry and pyrolyse it.

## Claims

1. A method of producing biochar comprising the steps of:
a. placing feedstock (60) in a kiln (10);
b. burning fuel in an oxidiser (70) and directing the resultant heated gases from the oxidiser to the feedstock to reduce the moisture content of the feedstock;
c. burning fuel in an oxidiser and directing the resultant heated gases from the oxidiser to the feedstock to pyrolyse the feedstock;
d. removing at least some of the pyrolytic gases, released from the feedstock in step c, to the oxidiser for burning therein;
e. directing at least a portion of the at least partially inert gases resultant from the burning of the pyrolytic gases in step d to the feedstock to regulate the amount of heat and air supplied to the kiln to controllably continue pyrolysis of the feedstock therein;
**characterised in that**;
at least some of the heated gases resultant from the fuel burning in either, or both, of steps b and c are directed around the outside of the kiln in an at least partial spiral manner (125); and
at least some of the resultant heated gases from the fuel burning in step b are directed through the inside of the kiln from the top to the bottom, some of said gases then being directed to the atmosphere via a chimney (35), and some of said gases being recirculated to the kiln again.

2. The method of claim 1, wherein the removal of the at least some of the pyrolytic gases in step d of claim 1 is effected by directing a portion of the gases resultant from the fuel burning in step c of claim 1 to the kiln.

3. The method of either one of claims 1 and 2, wherein the amount of air introduced to the oxidiser with the pyrolytic gases in step d of claim 1 is controlled such that incomplete combustion of the mixture of air and pyrolytic gases occurs in the oxidiser.

4. The method of claim 3, wherein air is controllably introduced into the gases directed from the oxidiser in step e of claim 1 such that at least a portion of the gases are flared-off before reaching the feedstock.

5. The method of any preceding claim, wherein the fuel burnt in the oxidiser in step c of claim 1 is solely formed of the resultant pyrolytic gases resultant from the pyrolysing of the feedstock in step c, and removed in step d, of claim 1.

6. The method of any preceding claim, wherein the at least some of the heated gases resultant from the fuel burning in step c of claim 1 are directed (130) to the top of the kiln directly and are mixed with the heated gases which have been directed around the outside of the kiln in an at least partial spiral manner.

7. The method of any preceding claim, wherein at least some of the pyrolytic gases removed in step d of claim 1 to the oxidiser for burning therein are directed into a combustor in a direction tangential to the centre of the combustor.

8. The method of claim 7, wherein the pyrolytic gases are directed into the oxidiser at a point above the inlet of a flue provided at the top of the oxidiser.

## Patentansprüche

1. Verfahren zur Herstellung von Bioholzkohle umfassend die Schritte:
a. Einbringen eines Speisestroms (60) in einen Brennofen (10);
b. Verbrennen eines Brennstoffs in einer Oxidationsvorrichtung (70) und Leiten der erhaltenen erhitzten Gase aus der Oxidationsvorrichtung in den Speisestrom, um den Feuchtigkeitsgehalt des Speisestroms zu verringern;
c. Verbrennen eines Brennstoffs in einer Oxidationsvorrichtung und Leiten der erhaltenen erhitzten Gase aus der Oxidationsvorrichtung in den Speisestrom, um den Speisestrom zu pyrolysieren;
d. Abtrennen von wenigstens einem Teil der Pyrolysegase, die von dem Einsatzstrom in Schritt c freigesetzt werden, zu der Oxidationsvorrichtung, um sie darin zu verbrennen;
e. Leiten wenigstens eines Anteils der wenigstens teilweise inerten Gase, die bei dem Verbrennen der Pyrolysegase in Schritt d erhalten werden, in den Speisestrom, um die Wärmemenge und die zu dem Brennofen geförderte Luft zu regulieren, um die Pyrolyse des Speisestroms darin kontrollierbar fortzusetzen,
**dadurch gekennzeichnet, dass** wenigstens ein Teil der erhitzten Gase, die bei dem Verbrennen des Brennstoffs in entweder einem der beiden oder in beiden Schritten b und c erhalten werden, um die Außenseite des Brennofens in einer wenigstens teilweise spiralförmigen Form (125) herum geleitet werden und
wenigstens ein Teil der erhaltenen erhitzten Gase aus dem Verbrennen des Brennstoffs in Schritt b durch das Innere des Brennofens von oben her nach unten hin geleitet werden, wobei ein Teil dieser Gase dann über einen Kamin (35) in die Atmosphäre geleitet wird und ein Teil dieser Gase wieder zu dem Brennofen zurückgeführt wird.

2. Verfahren nach Anspruch 1, bei dem das Entfernen des wenigstens einen Teils der Pyrolysegase in Schritt d von Anspruch 1 durchgeführt wird durch Leiten eines Teils der bei dem Schritt des Verbrennens des Brennstoffs in Schritt c von Anspruch 1 erhaltenen Gase zu dem Brennofen.

3. Verfahren nach einem der Ansprüche 1 oder 2, bei dem die Menge an Luft, die mit den Pyrolysegasen in Schritt d von Anspruch 1 in die Oxidationsvorrichtung eingeführt wird, derart gesteuert wird, dass eine unvollständige Verbrennung des Gemischs aus Luft und Pyrolysegasen in der Oxidationsvorrichtung auftritt.

4. Verfahren nach Anspruch 3, bei dem Luft in die Gase, die von der Oxidationsvorrichtung in Schritt c von Anspruch 1 geleitet werden, kontrolliert eingeführt wird, derart dass wenigstens ein Teil der Gase abgefackelt wird, bevor diese den Speisestrom erreichen.

5. Verfahren nach einem der vorhergehenden Ansprüche, bei dem der Brennstoff, der in der Oxidationsvorrichtung in Schritt c von Anspruch 1 verbrannt wird, ausschließlich aus den erhaltenen Pyrolysegasen gebildet wird, die bei der Pyrolyse des Speisestroms in Schritt c erhalten und in Schritt d von Anspruch 1 abgetrennt werden.

6. Verfahren nach einem der vorhergehenden Ansprüche, bei dem wenigstens ein Teil der erhitzten Gase, die bei dem Verbrennen des Brennstoffs in Schritt c von Anspruch 1 erhalten werden, direkt geleitet (130) werden zum oberen Bereich des Brennofens und mit den erhitzten Gasen gemischt werden, die um die Außenseite des Brennofens in einer wenigstens teilweise spiralförmigen Form herum geleitet wurden.

7. Verfahren nach einem der vorhergehenden Ansprüche, bei dem wenigstens ein Teil der Pyrolysegase, die in Schritt d von Anspruch 1 zu der Oxidationsvorrichtung abgetrennt wurden, um darin verbrannt zu werden, in einen Verbrenner in einer tangential zum Zentrum des Verbrenners ausgerichteten Richtung geleitet werden.

8. Verfahren nach Anspruch 7, bei dem die Pyrolysegase in die Oxidationsvorrichtung an einem Punkt geleitet werden, der über dem Einlass eines Kamins liegt, welcher im oberen Bereich der Oxidationsvorrichtung bereitgestellt wird.

## Revendications

1. Procédé de production de biochar, comprenant les étapes consistant à :
a. placer une charge d'alimentation (60) dans un four (10) ;
b. brûler du combustible dans un dispositif d'oxydation (70) et diriger les gaz chauffés résultants du dispositif d'oxydation à la charge d'alimentation pour réduire la teneur en humidité de la charge d'alimentation ;
c. brûler du combustible dans un dispositif d'oxydation et diriger les gaz chauffés résultants du dispositif d'oxydation à la charge d'alimentation pour pyrolyser la charge d'alimentation ;
d. retirer au moins une partie des gaz pyrolytiques, libérés de la charge d'alimentation à l'étape c, pour envoi au dispositif d'oxydation pour un brûlage dans celui-ci ;
e. diriger au moins une partie des gaz au moins partiellement inertes résultant du brûlage des gaz pyrolytiques à l'étape d dans la charge d'alimentation pour réguler la quantité de chaleur et d'air fournie au four pour continuer de manière contrôlable la pyrolyse de la charge d'alimentation dans celui-ci ;
**caractérisé par le fait qu'**
au moins une partie des gaz chauffés résultant du brûlage du combustible à l'une ou l'autre des étapes b et c, ou aux deux, est dirigée autour de l'extérieur du four d'une manière au moins partiellement en spirale (125) ; et
au moins une partie des gaz chauffés résultants provenant du brûlage du combustible à l'étape b est dirigée à travers l'intérieur du four du haut en bas, une partie desdits gaz étant ensuite dirigée à l'atmosphère par une cheminée (35), et une partie desdits gaz étant recyclée dans le four à nouveau.

2. Procédé selon la revendication 1, dans lequel on effectue le retrait de ladite au moins une partie des gaz pyrolytiques à l'étape d de la revendication 1 en dirigeant une partie des gaz résultant du brûlage du combustible à l'étape c de la revendication 1 dans le four.

3. Procédé selon l'une ou l'autre des revendications 1 et 2, dans lequel la quantité d'air introduite dans le dispositif d'oxydation avec les gaz pyrolytiques à l'étape d de la revendication 1 est contrôlée de telle sorte qu'une combustion incomplète du mélange d'air et de gaz pyrolytiques a lieu dans le dispositif d'oxydation.

4. Procédé selon la revendication 3, dans lequel de l'air est introduit de manière contrôlable dans les gaz dirigés à partir du dispositif d'oxydation à l'étape e de la revendication 1 de telle sorte qu'au moins une partie des gaz est brûlée avant d'atteindre la charge d'alimentation.

5. Procédé selon l'une quelconque des revendications précédentes, dans lequel le combustible brûlé dans le dispositif d'oxydation à l'étape c de la revendication 1 est uniquement formé des gaz pyrolytiques résultants, lesquels résultent de la pyrolyse de la charge d'alimentation à l'étape c, et retiré à l'étape d, de la revendication 1.

6. Procédé selon l'une quelconque des revendications précédentes, dans lequel ladite au moins une partie des gaz chauffés résultant du brûlage du combustible à l'étape c de la revendication 1 est dirigée (130) dans la partie supérieure du four directement et est mélangée avec les gaz chauffés qui ont été dirigés autour de l'extérieur du four d'une manière au moins partiellement en spirale.

7. Procédé selon l'une quelconque des revendications précédentes, dans lequel au moins une partie des gaz pyrolytiques retirée à l'étape d de la revendication 1 pour envoi au dispositif d'oxydation pour un brûlage dans celui-ci est dirigée dans un dispositif de combustion dans une direction tangentielle au centre du dispositif de combustion.

8. Procédé selon la revendication 7, dans lequel les gaz pyrolytiques sont dirigés dans le dispositif d'oxydation à un point au-dessus de l'entrée d'un conduit de cheminée disposé à la partie supérieure du dispositif d'oxydation.
